# EUROPÄISCHE PATENTSCHRIFT

(11) **EP 0 631 081 B1**
(45) Veröffentlichungstag und Bekanntmachung des Hinweises auf die Patenterteilung: **23.07.1997**
(21) Anmeldenummer: 94107197.9
(22) Anmeldetag: 07.05.1994
(51) Int. Cl.: F16L 19/07

(54) **Anschlussvorrichtung für Rohrleitungen mit geschlitztem Klemmring**
Conduit connection device with split clamp ring
Dispositif de connexion pour conduites avec collier de serrage fendu

(30) Priorität: 14.05.1993 DE 9307361 U
(43) Veröffentlichungstag der Anmeldung: 28.12.1994
(73) Patentinhaber: ARMATURENFABRIK HERMANN VOSS GMBH & CO., D-51688 Wipperfürth (DE)
(72) Erfinder: Rösch, Volker , Dr., D-45481 Mülheim (DE)
(74) Vertreter: Patentanwälte Dr. Solf & Zapf

(56) Entgegenhaltungen:
- DE-C- 3 011 430
- FR-A- 2 597 188

## Beschreibung

Die vorliegende Erfindung betrifft eine Anschlußvorrichtung zum schnellen und lösbaren Anschluß von Kunststoff-Rohrleitungen, bestehend aus einem Gehäuseteil mit einer Steckaufnahme für ein Ende der Rohrleitung und aus einem im Gehäuseteil angeordneten, einen in axialer Richtung durchgehenden Längsschlitz aufweisenden, radialelastischen Klemmring mit mindestens einer inneren, umlaufenden Schneidkante und mit einem Außenkonus, der zum Arretieren der Rohrleitung mit einem Innenkonus des Gehäuseteils zusammenwirkt, wobei der Klemmring durch eine in einem dem Längsschlitz diametral gegenüberliegenden Ringbereich gebildete Ringprofilschwächung in zwei Federarme unterteilt ist, wobei zur Bildung der Ringprofilschwächung der Klemmring in diesem Ringbereich und zumindest in einem Teilbereich seiner axialen Länge innen und außen jeweils eine in Umfangsrichtung gesehen kreisbogenförmig verlaufende Begrenzungskontur besitzt, wobei der Mittelpunkt des Krümmungsradius der äußeren Begrenzungskontur relativ zu dem Mittelpunkt des Krümmungsradius der inneren Begrenzungskontur in Richtung des Längsschlitzes versetzt ist.

Aus der DE-PS 30 11 430 ist eine Anschlußvorrichtung bzw. Steckarmatur bekannt, die sich im praktischen Einsatz im wesentlichen gut bewährt hat, da der Klemmring aufgrund einer einseitigen Ringprofilschwächung (Reduzierung der axialen Schnittfläche des Ringkörpers) im Bereich der Federarme relativ dickwandig ausgebildet sein kann, so daß er einerseits sehr formstabil, andererseits aber doch hinreichend federelastisch ist. Bei diesem bekannten Klemmring ist aber zur Bildung der Ringprofilschwächung auf der dem Längsschlitz abgekehrten Ring-Außenseite eine Abflachung vorgesehen, die bei der Herstellung einen speziellen Bearbeitungsschritt erforderlich macht, und zwar üblicherweise einen Fräsvorgang.

Das Dokument FR-A-2 597 188 beschreibt eine gattungsgemäße Anschlußvorrichtung mit einem geschlitzten Klemmring, der zur Bildung einer dem Schlitz diametral gegenüberliegenden "Ringprofilschwächung" eine äußere Konusfläche aufweist, die insgesamt relativ zu dem Innenquerschnitt im Bereich der Schneidkanten exzentrisch versetzt ist. Bei dieser Ausgestaltung tritt der Nachteil auf, daß in der Montage- bzw. Arretierstellung die gesamte Rohrleitung exzentrisch verlagert wird. Dies hat eine Verformung der Rohrleitung gegenüber dem Dichtbereich zur Folge. Zudem ist die exzentrische Außenkonusfläche auch relativ schwierig zu fertigen.

Der vorliegenden Erfindung liegt die Aufgabe zugrunde, die gattungsgemäße Anschlußvorrichtung im Bereich des Klemmringes derart zu verbessern, daß bei zumindest gleichbleibend guten, insbesondere aber weiter verbesserten Gebrauchseigenschaften eine vereinfachte und damit kostengünstigere Herstellung möglich ist.

Erfindungsgemäß wird dies dadurch erreicht, daß die äußere Begrenzungskontur der Ringprofilschwächung als Zylinderfläche ausgebildet ist, die sich - in Abhängigkeit von ihrem Krümmungsradius sowie vom Versatz ihres Krümmungs-Mittelpunktes gegenüber dem Krümmungs-Mittelpunkt der inneren Begrenzungskontur - in Umfangsrichtung mehr oder weniger weit in Richtung des Längsschlitzes erstreckt.

Somit ist erfindungsgemäß vorgesehen, ausgehend von einem "vollständigen" Klemmring, der als Innenkontur die mindestens eine Schneidkante und als Außenkontur den Außenkonus und gegebenenfalls einen sich daran in axialer Richtung anschließenden zylindrischen Abschnitt aufweist, die Innenkontur unverändert zu belassen und als äußere Begrenzungskontur der Ringprofilschwächung eine exzentrische Zylinderfläche zu bilden, die dann entweder den Außenkonus bereichsweise unterbricht ("beseitigt") oder aber in einem gegenüber dem Außenkonus axial versetzten Ringabschnitt angeordnet ist. Im letztgenannten Fall bleibt dann der sich nur über den übrigen axialen Ringbereich erstreckende Außenkonus in Umfangsrichtung vollständig erhalten.

Durch die Erfindung vereinfacht sich die Herstellung des Klemmringes erheblich, weil dieser wegen seiner in Umfangsrichtung ausnahmslos kreisbogenförmigen und außen sogar zumindest bereichsweise zylindrischen Begrenzungskonturen als Drehteil produziert werden kann. Es ist daher eine vollständig automatische Produktion möglich, wobei während zwei aufeinanderfolgender Dreh-Bearbeitungen lediglich ein exzentrisches Einspannen - entsprechend dem Versatz der Krümmungsmittelpunkte der Begrenzungskonturen - vorzusehen ist. Dies kann ohne weiteres durch eine automatische Spannvorrichtung realisiert werden.

Durch die beschriebene Ausgestaltung tritt zudem der weitere wesentliche Vorteil auf, daß durch Auslegung des Verhältnisses der Krümmungsradien der inneren und äußeren Begrenzungskonturen sowie des Maßes des relativen Versatzes zwischen ihren Krümmungsmittelpunkten die Elastizitätseigenschaften des Klemmringes in einem weiten Bereich beeinflußt und gesteuert werden können. So kann sich die die Ringprofilfläche (Schnittfläche in einer axialen, durch die Ringmittelachse verlaufenden Schnittebene) reduzierende, zylindrische Begrenzungskontur ausgehend vom schwächsten, dem Längsschlitz gegenüberliegenden Bereich in Umfangsrichtung mehr oder weniger weit in Richtung des Längsschlitzes erstrecken, so daß sich der "Elastizitätsverlauf" des Klemmringes in seiner Umfangsrichtung ändert. Erstreckt sich beispielswiese die so gebildete Ringprofilschwächung nur über einen kleinen Umfangsbereich von z.B. etwa 30°, so wird die elastische Verformung hauptsächlich in dem dem Längsschlitz gegenüberliegenden Bereich erfolgen; wenn sich aber die Ringprofilschwächung derart weiter in Umfangsrichtung erstreckt, z.B. bis zu dem Längsschlitz (d.h. nahezu über 360°), daß die Ringprofilfläche in beiden Federarmen in Richtung des Längsschlitzen stetig zunimmt, erstreckt sich die elastische Verformbarkeit auch in den Bereich der beiden Federarme.

Weitere vorteilhafte Ausgestaltungsmerkmale und vorteilhafte Wirkungen der Erfindung sollen nun in der folgenden Beschreibung von bevorzugten Ausführungsbeispielen anhand der Zeichnung näher erläutert werden. Dabei zeigen:
- Fig. 1: einen Axialschnitt durch eine erfindungsgemäße Anschlußvorrichtung mit einer ersten Ausführungsform des Klemmringes,
- Fig. 2: eine Draufsicht des Klemmringes von der Einsteckseite her, d.h. in Pfeilrichtung II gemäß Fig. 1 bzw. Fig. 3,
- Fig. 3: eine Seitenansicht des Klemmringes in Pfeilrichtung III gemäß Fig. 2,
- Fig. 4: eine Darstellung analog zu Fig. 1 mit einer zweiten Ausführungsform des Klemmringes,
- Fig. 5: eine Draufsicht des Klemmringes analog zu Fig. 2, d.h. in Pfeilrichtung V gemäß Fig. 4 bzw. Fig. 6,
- Fig. 6: eine Seitenansicht des Klemmringes in Pfeilrichtung VI gemäß Fig. 5,
- Fig. 7: eine Darstellung analog zu Fig. 1 bzw. Fig. 4 mit einer dritten Ausführungsform eines erfindungsgemäßen Klemmringes,
- Fig. 8: eine Draufsicht des Klemmringes analog zu Fig. 2, d.h. von der Einsteckseite her in Pfeilrichtung VIII gemäß Fig. 7 bzw. Fig. 10,
- Fig. 9: eine Draufsicht des Klemmringes von der gegenüberliegenden Seite her, d.h. in Pfeilrichtung IX gemäß Fig. 7 bzw. Fig. 10 und
- Fig. 10: eine Seitenansicht des Klemmringes in Pfeilrichtung X gemäß Fig. 8.

In den verschiedenen Figuren der Zeichnung sind gleiche Teile stets mit den gleichen Bezugszeichen versehen, so daß jede eventuell nur einmal vorkommende Beschreibung eines Teils analog auch bezüglich der anderen Zeichnungsfiguren gilt, in denen dieses Teil mit dem entsprechenden Bezugszeichen ebenfalls zu erkennen ist.

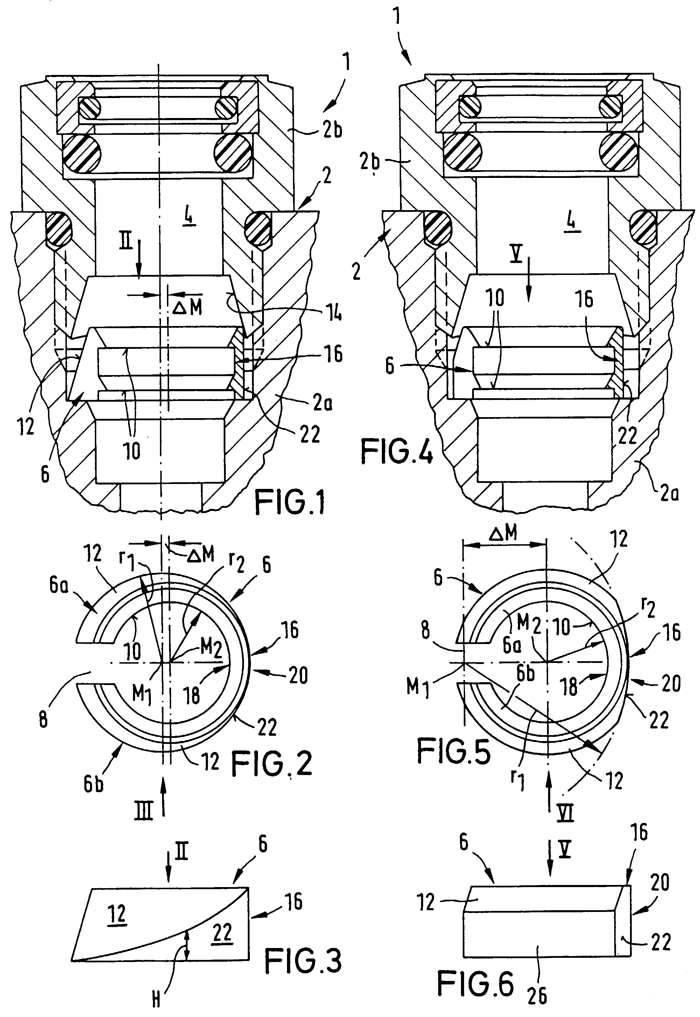

Wie sich aus jeder der Fig. 1, 4 und 7 ergibt, besteht eine erfindungsgemäße Anschlußvorrichtung 1 aus einem Gehäuseteil 2 mit einer einseitig offenen Steckaufnahme 4 für ein Ende einer nicht dargestellten Rohrleitung sowie aus einem in dem Gehäuseteil 2 angeordneten Klemmring 6 zum Arretieren der eingesteckten Rohrleitung. Der Klemmring 6 sitzt derart in einer Erweiterung der Steckaufnahme 4, daß er diese - und damit auch die eingesteckte Rohrleitung - umschließt. Der Klemmring 6 weist an einer Stelle seines Umfanges einen axial und radial durchgehenden Längs- bzw. Radialschlitz 8, d.h. eine Unterbrechung in seinem Umfangsverlauf, auf, wodurch er radialelastisch aufgeweitet und verengt werden kann. In seinem inneren Umfangsbereich besitzt der Klemmring 6 mindestens eine radial nach innen ragende, umlaufende Schneidkante 10; in den dargestellten Ausführungsbeispielen sind jeweils zwei axial beabstandete Schneidkanten 10 vorgesehen. Der Klemmring 6 besitzt ferner einen Außenkonus 12, der zum Arretieren der Rohrleitung mit einem Innenkonus 14 des Gehäuseteils 2 derart zusammenwirkt, daß bei einem Zug an der Rohrleitung entgegen der Einsteckrichtung der Klemmring 6 durch kraftschlüssige Anlage seiner Schneidkanten 10 mitgenommen wird, bis sein Außenkonus 12 zur Anlage an den Innenkonus 14 des Gehäuseteils 2 gelangt. Bei weitergehendem Zug wird über die Konen 12, 14 der Klemmring 6 - in an sich bekannter Weise - elastisch verengt, so daß die Schneidkanten 10 kraft- und/oder formschlüssig mit dem Rohr-Außenumfang zusammenwirken und so das Rohr gegen Herausziehen arretiert wird.

In den dargestellten Ausführungsbeispielen ist das Gehäuseteil 2 zweiteilig ausgebildet, wobei ein erstes Teil 2a von einem Ventilgehäuse oder dergleichen gebildet sein kann, während ein zweites Teil 2b als Überwurfschraube ausgebildet ist, die mit einem Außengewinde in ein Innengewinde des ersten Teils 2a eingeschraubt ist.

Der Klemmring 6 weist in seinem dem Längsschlitz 8 diametral gegenüberliegenden Ringbereich eine Ringprofilschwächung 16 auf, d.h.in diesem Bereich ist die axiale Schnittfläche des Ringkörpers gegenüber dem übrigen Ringbereich reduziert. Hierdurch ist der Klemmring 6 in zwei symmetrische Federarme 6a und 6b unterteilt.

Zur Bildung dieser Ringprofilschwächung 16 ist vorgesehen, daß der Klemmring 6 in diesem Umfangsbereich sowie zumindest in einem Teilbereich seiner axialen Länge innen sowie außen jeweils eine in Umfangsrichtung gesehen kreisbogenförmig verlaufende Begrenzungskontur 18, 20 besitzt. Hierbei ist der Mittelpunkt M₁ des Krümmungsradius r₁ der äußeren Begrenzungskontur 20 relativ zu dem Mittelpunkt M₂ des Krümmungsradius r₂ der inneren Begrenzungskontur 18 in Richtung des Längsschlitzes 8 versetzt angeordnet. Dieser Versatz ist in der Zeichnung mit "ΔM" gekennzeichnet.

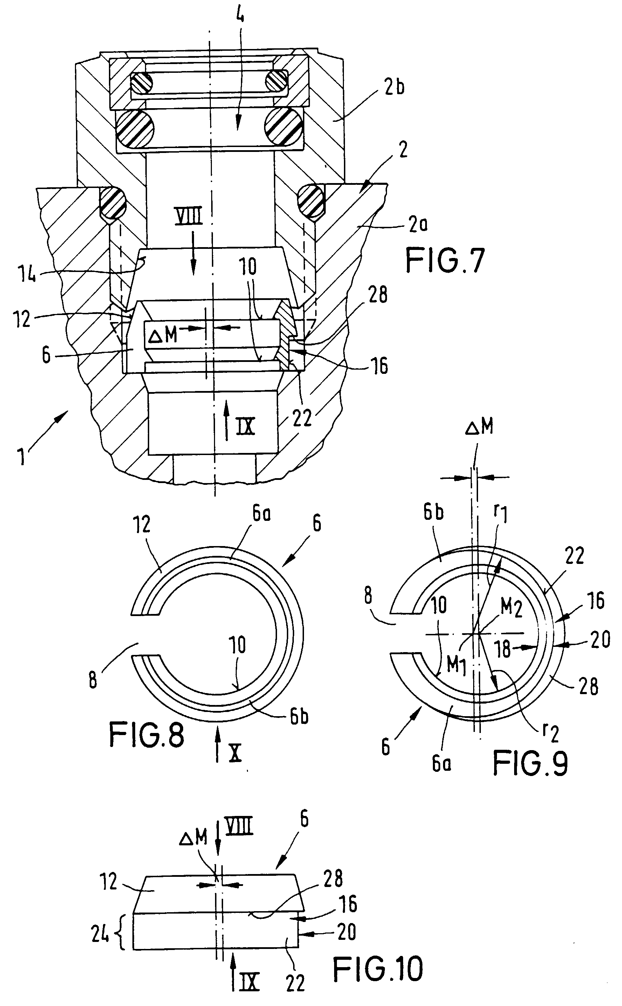

In den dargestellten, erfindungsgemäßen Ausführungsbeispielen entspricht die innere Begrenzungskontur 18 der unveränderten, ursprünglichen Ringkontur mit den Schneidkanten 10, und die äußere Begrenzungskontur 20 der Ringprofilschwächung 16 ist als Zylinderfläche 22 ausgebildet, die im Falle der Ausführungsformen nach Fig. 1 und 3 sowie Fig. 4 bis 6 jeweils den Außenkonus 12 des Klemmringes 6 unterbricht. Im Falle der Ausführung nach Fig. 7 bis 10 ist die Zylinderfläche 22 demgegenüber nur in einem Teil der axialen Länge des Klemmringes 6 angeordnet, d.h. sie liegt hier in einem gegenüber dem Außenkonus 12 axial versetzt angeordneten Ringabschnitt 24 (s. hierzu Fig. 10). Bei dieser Ausführungsform bleibt somit der Außenkonus 12 in Umfangsrichtung vollständig vorhanden.

Somit erstreckt sich die die äußere Kontur der Ringprofilschwächung 16 bildende Zylinderfläche 22 - in Abhängigkeit von ihrem Krümmungsradius r₁ sowie vom Versatz ΔM ihres Krümmungsmittelpunktes M₁ gegenüber dem Krümmungsmittelpunkt M₂ der inneren Begrenzungskontur 18 - in Umfangsrichtung mehr oder weniger weit in Richtung des Längsschlitzes 8; diese umfängliche Erstreckung der Zylinderfläche 22 liegt in einem Winkelbereich zwischen 30° und 360° - bezogen auf die Mittelachse des Klemmringes 6.

Im folgenden soll noch kurz auf die einzelnen Ausführungsformen konkreter eingegangen werden.

Bei der in Fig. 1 bis 3 veranschaulichten Ausführungsform erstreckt sich der Außenkonus 12 des Klemmringes 6 im an den Längsschlitz 8 angrenzenden Umfangsbereich über die gesamte axiale Länge des Klemmringes 6. Auf der diametral gegenüberliegenden Seite der Ringprofilschwächung 16 erstreckt sich die die äußere Begrenzungskontur 20 bildende Zylinderfläche 22 vorzugsweise über die gesamte axiale Ringlänge, wobei dann diese Zylinderfläche 22 in Umfangsrichtung eine in Richtung des Längsschlitzes 8 insbesondere bis auf Null abnehmende axiale Höhe H aufweist (siehe hierzu Fig. 3). Die Zylinderfläche 22 erstreckt sich somit bei dieser Ausführung praktisch über den gesamten Ringumfang, wobei sie ihre größte Höhe H - den Außenkonus 12 vollständig beseitigend - im dem Längsschlitz 8 diametral gegenüberliegenden Ringbereich besitzt.

Im Falle der Ausführung nach Fig. 4 bis 6 erstreckt sich die Zylinderfläche 22 nur über einen umfänglichen Bereich von etwa 80° bis 100°, wobei hier bei relativ großem Versatz ΔM der Krümmungsradius r₁ der Zylinderfläche 22 sehr viel größer als der Krümmungsradius r₂ der inneren Begrenzungskontur 18 ist (siehe Fig. 5). Gemäß Fig. 6 erstreckt sich der Außenkonus 12 hier nur über einen Teilbereich der axialen Länge des Klemmringes 6, und an den Außenkonus 12 schließt sich ein zylindrischer Ringabschnitt 26 an.

Bei der Ausführung nach Fig.7 bis 10 ist - wie oben bereits erwähnt - die die Ringprofilschwächung 16 bildende äußere Begrenzungskontur 20 bzw. die Zylinderfläche 22 nur in dem gegenüber dem Außenkonus 12 axial versetzten Ringabschnitt 24 angeordnet, wobei sich gemäß Fig. 9 die Zylinderfläche 22 - etwa analog zur Ausführung nach Fig. 1 bis 3 - wiederum über nahezu den gesamten umfänglichen Ringverlauf erstreckt. Zwischen der Zylinderfläche 22 und dem Außenkonus 12 ergibt sich bei dieser Ausführungsform eine Stufe 28. Dies ist in den Fig. 7, 9 und 10 gut zu erkennen.

## Patentansprüche

1. Anschlußvorrichtung (1) zum schnellen und lösbaren Anschluß von Kunststoff-Rohrleitungen, bestehend aus einem Gehäuseteil (2) mit einer Steckaufnahme (4) für ein Ende der Rohrleitung und aus einem im Gehäuseteil (2) angeordneten, einen in axialer Richtung durchgehenden Längsschlitz (8) aufweisenden, radialelastischen Klemmring (6) mit mindestens einer inneren, umlaufenden Schneidkante (10) und mit einem Außenkonus (12), der zum Arretieren der Rohrleitung mit einem Innenkonus (14) des Gehäuseteils (2) zusammenwirkt, wobei der Klemmring (6) durch eine in einem dem Längsschlitz (8) diametral gegenüberliegenden Ringbereich gebildete Ringprofilschwächung (16) in zwei Federarme (6a,6b) unterteilt ist, wobei zur Bildung der Ringprofilschwächung (16) der Klemmring (6) in diesem Ringbereich und zumindest in einem Teilbereich seiner axialen Länge innen und außen jeweils eine in Umfangsrichtung gesehen kreisbogenförmig verlaufende Begrenzungskontur (18, 20) besitzt, wobei der Mittelpunkt (M₁) des Krümmungsradius (r₁) der äußeren Begrenzungskontur (20) relativ zu dem Mittelpunkt (M₂) des Krümmungsradius (r₂) der inneren Begrenzungskontur (18) in Richtung des Längsschlitzes (8) versetzt ist,
**dadurch gekennzeichnet**, daß die äußere Begrenzungskontur (20) der Ringprofilschwächung (16) als Zylinderfläche (22) ausgebildet ist, die sich - in Abhängigkeit von ihrem Krümmungsradius (r₁) sowie vom Versatz (Δ M) ihres Krümmungs-Mittelpunktes (M₁) gegenüber dem Krümmungs-Mittelpunkt (M₂) der inneren Begrenzungskontur (18) - in Umfangsrichtung mehr oder weniger weit in Richtung des Längsschlitzes (8) erstreckt.

2. Anschlußvorrichtung nach Anspruch 1,
**dadurch gekennzeichnet**, daß sich die Zylinderfläche (22) in Umfangsrichtung über einen Winkelbereich zwischen 30° und 360° erstreckt, bezogen auf die Mittelachse des Klemmringes (6).

3. Anschlußvorrichtung nach Anspruch 1 oder 2,
**dadurch gekennzeichnet**, daß die die äußere Begrenzungskontur (20) der Ringprofilschwächung (16) bildende Zylinderfläche (22) den Außenkonus (12) des Klemmringes (6) unterbricht.

4. Anschlußvorrichtung nach Anspruch 1 oder 2,
**dadurch gekennzeichnet**, daß die die äußere Begrenzungskontur (20) der Ringprofilschwächung (16) bildende Zylinderfläche (22) in einem gegenüber dem Außenkonus (12) axial versetzt angeordneten Ringabschnitt (24) liegt.

## Claims

1. A connecting device (1) for the rapid and releasable connection of synthetic pipelines, comprising a housing part (2) having a plug-type receiver (4) for one end of the pipeline and a radially resilient clamping ring (6) which is arranged in the housing part (2), has an elongate slot (8) passing right through in the axial direction and has at least one inside peripheral cutting edge (10) and an external conical shape (12) which, in order to lock the pipeline, cooperates with an internal conical shape (14) of the housing part (2), the clamping ring (6) being divided into two spring arms (6a, 6b) by an annular-profile thinner portion (16) which is formed in an annular region diametrically opposite the elongate slot (8), for the formation of the annular-profile thinner portion (16) the clamping ring (6) possessing in this annular region and at least in a region of its axial length respectively on the inside and on the outside a delimiting contour (18, 20) which runs in an arc, as seen in the peripheral direction, the centre point (M₁) of the radius of curvature (r₁) of the outside delimiting contour (20) being offset relative to the centre point (M₂) of the radius of curvature (r₂) of the inside delimiting contour (18) in the direction of the elongate slot (8), characterized in that the outside delimiting contour (20) of the annular-profile thinner portion (16) is constructed as a cylinder surface (22) which - in dependence on its radius of curvature (r₁) and on the offset (ΔM) of its curvature centre point (M₁) from the curvature centre point (M₂) of the inside delimiting contour (18) - in the peripheral direction extends to a greater or lesser extent in the direction of the elongate slot (8).

2. A connecting device according to Claim 1, characterized in that the cylinder surface (22) extends in the peripheral direction over an angular range of between 30° and 360°, relative to the centre axis of the clamping ring (6).

3. A connecting device according to Claim 1 or 2, characterized in that the cylinder surface (22) forming the outside delimiting contour (20) of the annular-profile thinner portion (16) interrupts the external conical shape (12) of the clamping ring (6).

4. A connecting device according to Claim 1 or 2, characterized in that the cylinder surface (22) forming the outside delimiting contour (20) of the annular-profile thinner portion (16) lies within an annular portion (24) offset axially from the external conical shape (12).

## Revendications

1. Dispositif de connexion (1) pour le raccordement rapide et détachable de conduites tubulaires réalisées en une matière synthétique, ce dispositif comportant un élément de boîtier (2) avec un logement (4) d'introduction de l'extrémité d'une conduite tubulaire, et un collier de serrage (6) radialement élastique disposé dans l'élément de boîtier (2) et présentant une fente longitudinale (8) continue dans la direction axiale, ce collier comportant au moins une arête intérieure périphérique (10) et un cône extérieur (12) qui coopère avec un cône intérieur (14) de l'élément de boîtier (2) pour bloquer la conduite tubulaire, le collier de serrage (6) étant divisé en deux bras élastiques (6a, 6b) par un affaiblissement de profil annulaire (16) formé dans une région annulaire diamétralement opposée à la fente longitudinale (8), le collier de serrage (6) présentant, pour former cet affaiblissement de profil annulaire (16), dans cette région annulaire et sur une partie de sa longueur axiale, à l'intérieur et à l'extérieur, respectivement un contour de délimitation (18, 20) de forme en arc de cercle lorsqu'on regarde dans la direction périphérique, le centre (M₁) du rayon de courbure (r₁) du contour de délimitation extérieur étant décalé dans la direction de la fente longitudinale (8) par rapport au centre (M₂) du rayon de courbure (r₂) du contour de délimitation intérieur (18),
caractérisé en ce que le contour de délimitation extérieur (20) de l'affaibissement de profil annulaire (16) a la forme d'une surface cylindrique (22) qui s'étend dans la direction périphérique plus ou moins loin dans la direction de la fente longitudinale (8), en fonction de son rayon de courbure (r₁) ainsi que du décalage (ΔM) de son centre de courbure (M₁) par rapport au centre de courbure (M₂) du contour de délimitation intérieur (18).

2. Dispositif de connexion selon la revendication 1,
caractérisé en ce que la surface cylindrique (22) s'étend dans la direction périphérique sur une région angulaire entre 30° et 360° par rapport à l'axe central du collier de serrage (6).

3. Dispositif de connexion selon la revendication 1 ou 2,
caractérisé en ce que la surface cylindrique (22) qui forme le contour de délimitation extérieur (20) de l'affaiblissement de profil annulaire (16) interrompt le cône extérieur (12) du collier de serrage (6).

4. Dispositif de connexion selon la revendication 1 ou 2,
caractérisé en ce que la surface cylindrique (22) qui forme le contour de délimitation extérieur (20) de l'affaiblissement de profil annulaire (16) est située dans une portion annulaire (24) décalée axialement par rapport au cône extérieur (12).
